(19) Europäisches Patentamt

European Patent Office

Office européen des brevets

(11) Veröffentlichungsnummer: **0 155 226 B1**

# (12) EUROPÄISCHE PATENTSCHRIFT

(45) Veröffentlichungstag der Patentschrift: **12.06.91**

(21) Anmeldenummer: **85730040.4**

(22) Anmeldetag: **14.03.85**

(51) Int. Cl.⁵: **C04B 28/02**, //(C04B28/02, 22:00,22:02,22:12,24:42)

(54) **Verfahren zum Herstellen eines salzhaltigen Pulvers und Verwendung des Pulvers, insbesondere zur Herstellung von elektrisch leitfähigem Beton.**

(30) Priorität: **16.03.84 DE 3410224**

(43) Veröffentlichungstag der Anmeldung:
**18.09.85 Patentblatt 85/38**

(45) Bekanntmachung des Hinweises auf die
Patenterteilung:
**12.06.91 Patentblatt 91/24**

(84) Benannte Vertragsstaaten:
**AT BE CH DE FR GB IT LI LU NL SE**

(56) Entgegenhaltungen:
**EP-A- 0 022 055      CH-A- 313 731**
**DE-A- 2 647 411      DE-A- 3 147 773**
**FR-A- 411 618        FR-A- 2 238 806**
**US-A- 2 336 723**

(73) Patentinhaber: **MANNESMANN Aktiengesell-**
**schaft**
**Mannesmannufer 2**
**W-4000 Düsseldorf 1(DE)**

(72) Erfinder: **Siegmund, Werner**
**Oberdorfstrasse 17**
**W-6901 Heiligkreuzsteinach(DE)**
Erfinder: **Boes, Prof. Dr.-Ing. Alois**
**Schleckheimer Str. 39**
**W-5100 Aachen(DE)**

(74) Vertreter: **Meissner, Peter E., Dipl.-Ing. et al**
**Patentanwaltsbüro Meissner & Meissner,**
**Herbertstrasse 22**
**W-1000 Berlin 33(DE)**

## Beschreibung

Die Erfindung betrifft ein Verfahren zur Herstellung eines salzhaltigen Pulvers gemäß dem Oberbegriff des Patentanspruchs 1 sowie die Verwendung eines derartigen Pulvers.

Die Erfindung geht dabei von einem durch die DE-A-29 43 447 (=EP-A-22 055) bekannten Stand der Technik aus. Eine Salz (nämlich NaCl und andere mineralische Bestandteile) enthaltende Substanz wird danach bei Anwesenheit von Wasser und bei Anwesenheit geringer Mengen hydrophobierender organischer Siliziumverbindungen zu einem mörtelartigen Brei vermischt, der Brei wird anschließend getrocknet und der getrocknete Kuchen gemahlen. Das so erzeugte Feinkorngemisch wird als Zuschlagstoff für bitumen- oder asphaltgebundene Fahrbahndecken verwendet und hat eine die Eisbildung bei Frost hemmende Wirkung. Die Festigkeitseigenschaften einer Bitumendecke werden durch diesen bekannten Zuschlagstoff nicht nachteilig beeinflußt.

Ein weiterer Zuschlagstoff, der Zellstoff, Wasser, Steinmehl und Natronwasserglas enthält und zur Verringerung des Verschleißens der Deckbeläge sowie bei Zusatz von Salz gefrierpunktserniedrigend wirkt, ist aus der DE-A-31 47 773 bekannt.

Schließlich ist noch aus der FR-A-22 38 806 ein Deckbelag aus Beton bekannt, der neben Zement, Sand und Schlacke Ruß enthält.

Diese bekannten, der Sicherheit des Straßenverkehrs dienenden Maßnahmen lösen die Frage aus, ob nicht auch Fahrbahndecken oder Gehwegplatten aus Beton mit einer derartigen Eisbildungshemmung versehen werden können, um solche Fahrbahnen und Gehwege nicht oder weniger mit Salz streuen zu müssen. Dies ist insbesondere für Brückenfahrbahnen wichtig, weil dort einerseits bekanntlich die Glatteisgefahr extrem groß ist und andererseits durch Streusalz der Korrosionsangriff an stählernen Bauelementen der Brücke gefördert wird. Im übrigen führten aber Beobachtungen an Brücken, die in einer Stahl-Beton-Verbundkonstruktion ausgeführt sind, zu der Erkenntnis, daß örtlicherseits auftretende Zerstörungen an Stahlteilen nicht allein durch Streusalzwirkung zu erklären sind. Eine erhöhte, lokal zwar sehr begrenzte Korrosion an Verbindungsteilen und Anschlußstücken ist häufig dann festzustellen, wenn elektrisch betriebene Bahnen über die Brücken führen.

Offensichtlich bilden sich willkürliche Kriechstrompfade zu Stahlteilen auch dann aus, wenn diese Stahlteile durch Beton an sich von den stromführenden Gleisen isoliert sind. Sinn der Erfindung ist es, für diese Probleme eine Lösung anzubieten. Ihr liegt daher die Aufgabe zugrunde, einen neuen Stoff zu schaffen, der einmal Betonteilen eine gewisse eisbildungshemmende Eigenschaft verleiht, zum anderen diese zu einem Halbleiter macht, um insbesondere Kriechströme in bestimmbare Bahnen zu lenken udn von gefährdeten Teilen einer Konstruktion fernhalten zu können. Es sollte also ein salzhaltiges, möglicht wenig hygroskopisches Pulver geschaffen werden, das sich - in aushärtbaren Massen eingebracht - nicht nachteilig auf die üblichen Eigenschaften der ausgehärteten Massen auswirkt und sich vor allem mit Beton verträgt.

Zu Lösung der gestellten Aufgaben eignet sich ein Pulver, das sich durch sein Herstellungsverfahren charakterisieren läßt. Dieses Herstellungsverfahren ist durch die Merkmale des Anspruchs 1 gekennzeichnet. Vorteilhafte Weiterbildungen des Verfahrens sind in den Unteransprüchen 2 bis 6 angegeben. Die erfindungsgemäße Verwendung des mit diesem Verfahren hergestellten Pulvers ist in den Unteransprüchen 7 - 11 angegbn.

Der aus einer Lösung mit Wasserglas ausgefällte Stoff stellt ein Vorprodukt dar, welches dekantiert (d.h. von der Hauptmenge der Restflüssigkeit befreit), getrocknet und gemahlen (vorzugsweise auf eine Korngröße unter 0,1 mm) einenauch für bitumengebundene Straßendecken einsetzbaren frosthemmenden Zuschlagstoff bildet. Das erfindungsgemäß hergestellte Pulver eignet sich aber ganz besonders als Zuschlagstoff für Beton. Das richtige Vorgehen bei der Herstellung erkennt man unter anderem daran, daß das Pulver in Wasser alkalisch reagiert.

Wasserglas ($Na_2O \cdot 3\text{-}4SiO_2$) ist im Handel meist in mit Wasser verdünnter Form erhältlich. Dieses flüssige Wasserglas läßt sich sehr gut mit einer Salzsole unter Umrühren vermischen. Die Fallungsreaktion tritt bei Zimmertemperatur rasch ein, Zweckmäßigerweise läßt man aber die Mischung eine Weile reagieren. Für das erfindungsgemäße Verfahren kann neben Natronwasserglas auch Kaliwasserglas oder Doppelwasserglas, welches sowohl Natrium wie auch Kalium enthält, verwendet werden.

Das Mol-Verhältnis zwischen den Reaktionspartnern ist in weiten Grenzen variierbar. Soll das Pulver jedoch für hochwertige Betontypen verwendet werden, sollte wenigstens 20 % Wasserglas in Bezug auf die gelöste Kochsalzmenge eingesetzt werden. Für viele Anwendungszwecke des Pulvers kann bei seiner Herstellung mit Salzüberschuß gearbeitet werden. Es kann sogar mehr Salz in eine bestimmte Flüssigkeitsmenge eingebracht werden, als in Lösung gehen kann. Es entsteht dann in Verbindung mit noch nicht gelösten Salzkristallen ein Vorprodukt, in dem nach dem Dekantieren und Trocknen sowie dem anschließenden Mahlen die Eigenschaften des reinen Vorproduktes einer Fällung dominieren.

Es ist ein Herstellungsverfahren denkbar, bei dem auf das Mahlen verzichtet werden kann, in dem die Fällung unter starker Scherung stattfindet, beispielsweise unter der Wirkung eines Turbinenrührers. Insofern soll die in den Ansprüchen enthaltene Vorschrift des Mahlens nur eine bedingte Vorschrift sein. Das erfindungsgemäße Verfahren führt entsprechend Anspruch 3 zu einer Verwertungsmöglichkeit von Abfallsalz aus der Kaliindustrie. Es wirkt sich auf den Ablauf des erfindungsgemäßen Herstellungsverfahrens und auf die Eigenschaften des Pulvers sogar vorteilhaft aus, daß derartige Abfallsalze neben NaCl noch 1 - 3 % KCl, 0,1 - 3 % $MgCl_2$, 0,1 - 32 % $MgSO_4$ und etwa 10 % unlösliche Bestandteile, manchmal auch Ton enthalten.

Soweit die in Wasser unlöslichen Bestandteile nicht mit dem NaOH-Gehalt des Wasserglases reagieren und in die Bestandteile der Fällung mit eingehen, werden sie zu Bestandteilen des erfindungsgemäßen Pulvers, ohne dessen Charakter zu verändern. Schließlich kann auch Abfallauge der Kaliaufbereitung bei geeigneter Zusammensetzung verwendet werden.

Patentanspruch 7 betrifft die Verwendung eines Pulvers, welches nach dem Trocknen und Mahlen eines Vorproduktes entsteht. Das Vorprodukt wiederum ist nach dem Vermischen einer NaCl-haltigen Wasser- Salz-Lösung mit Wasserglas ausgefallen und wurde nach dem Trocknen dekantiert. Erfindungsgemäß wird das Pulver als Zuschlagstoff für aushärtbare Massen verwendet, die nach dem Aushärten und einer Aushärtezeit von 5 x 24 Stunden im lufttrockenen Zustand die elektrische Leitfähigkeit eines Halbleiters haben. Der bevorzugte Verwendungszweck ist die Herstellung von elektrisch leitfähigem Beton.

Leitfähigkeit und elektrischer Widerstand stehen bekanntlich in einem reziproken Verhältnis zueinander. Der elektrische Widerstand der an Probekörpern aus einem Beton BZ 55 mit 7 % des erfindungsgemäßen Pulvers gemessen wurde, lag zwischen im Abstand von 4 cm angeordneten, eingelassenen metallischen Kontaktstiften zwischen 50.000 und 150.000 Ohm. Ein 6 cm langer Quader ließ sich unter einer an den beiden 2 x 3 cm großen Stirnflächen anliegenden Gleichspannung von 12 Volt innerhalb einer halben Stunde von Zimmertemperatur (19 °C) auf 27 °C erwärmen. Damit ergibt sich die Möglichkeit, Bauteile aus Beton herzustellen, die unmittelbar durch elektrischen Strom, d.h. ohne Einbettung einer Heizwiderstandswicklung beheizbar sind.

Überraschenderweise wirkt das erfindungsgemäße Pulver für den Beton auch als Beschleuniger.

Praktisch führt der erfindungsgemäße Verwendungszweck auch zu einem neuen Produkt, nämlich zu einem Beton bzw. zu Betonformkörpern mit den üblichen Bestandteilen wie Sand, Kies und Zement, die durch einen an Kieselsäure gebundenen Kochsalzgehalt von normalerweise 0,5 - 10 % gekennzeichnet sind. Der neue Beton besitzt die Eigenschaft der elektrischen Leitfähigkeit im Sinne eines Halbleiters.

In Betonplatten, die nur Druckbelastungen ausgesetzt sind und wenig Grobkorn enthalten, lassen sich auch 20 % Salz und mehr einbringen. So hohe Salzgehalte werden jedoch auf Sonderfälle begrenzt bleiben.

Leitfähiger Beton dürfte insbesondere im Brückenbau und für Brückensanierungen von Bedeutung sein. Er kann das Bett für Gleise einer Straßenbahn bilden, geerdet werden und so Kriechströme in vorbestimmbare Pfade lenken.

Zu dem unter Anspruch 7 genannten Verwendungszweck lassen sich die Ausführungen zum Anspruch 3 sinngemäß heranziehen. Im Anspruch 5 ist niedergelegt, wie in der Praxis verfahren werden kann. Danach werden 30 Gewichtsteile Kali-Abfallsalz, 50 Gewichtsteile Wasser und 20 Gewichtsteile flüssiges Industriewasserglas vermischt. Die Fällung vereinigt sich mit den unlöslichen Bestandteilen zum Vorprodukt, welches dekantiert, getrocknet und gemahlen wird.

Die nachfolgende Tabelle soll weitere Mischungsbeispiele geben:

| Bestandteile | Mischung Nr. | | | | | | | |
|---|---|---|---|---|---|---|---|---|
| | 1 | 2 | 3 | 4 | 5 | 6 | 7 | 8 |
| NaCl | 5 | 10 | 20 | 15 | 25 | 30 | 20 | 40 |
| Begleitmineralien | - | - | 5 | 5 | - | - | 15 | - |
| Wasser | 90 | 80 | 55 | 70 | 65 | 50 | 45 | 50 |
| Wasserglas (50 %ig) | 5 | 10 | 20 | 10 | 10 | 20 | 20 | 10 |
| Summe | 100 | 100 | 100 | 100 | 100 | 100 | 100 | 100 |

Die Reinheit des erfindungsgemäßen Pulvers hängt vom Anwendungszweck ab. Herstellungsverfahren und Verwendungszweck sind aufeinander ggf. durch Versuche abzustimmen.

Besonders hervorgehoben seien die Verwendungen gemäß den Ansprüchen 8 - 10. So ermöglicht es die Erfindung, bestimmte Teile einer Brücke leitfähig zu machen, auch armierte Teile. Das erfindungsgemäße Pulver im Beton verhindert, daß in dem Beton eingelassene Betonteile rosten, da vagabundierende Ströme in die Erde abgeleitet werden können.

Außerdem bildet das erfindunsgemäße Pulver auf Stahlteilen eine Schutzschicht, die diese vor Korrosionsangriff bewahrt. Dasselbe trifft ein, wenn Stahlteile sich in der Flüssigkeit befinden, in denen die Fällungsreaktion stattfindet.

Ein weiterer Vorteil der Erfindung besteht darin, daß sie es ermöglicht Stoffe in den Beton einzubringen und darin zu konservieren, die normalerweise die Festigkeit oder Lebensdauer eines Betonkörpers beeinträchtigen.

So kann erfindungsgemäß bspw. Eisenpulver, welches in feuchter Atmosphäre relativ schnell rostet, in den Beton eingebracht werden, ohne daß die nahe oder an der Oberfläche eines Betonkörpers liegenden Eisenpartikel Rostflecken bilden. Der Eisenpulveranteil kann 3-15% betragen. Soll eine Betonwand magnetisierbar sein, kann der Eisenpulveranteil durchaus auf 20-30% erhöht werden. Es wird dann auch ein auf etwa 8-12% erhöhter Anteil an dem erfindungsgemäßen Pulver vorzusehen sein, während der Rest aus den Üblichen, zweckmäßigerweise nicht zu grobkörnigen Zuschlagstoffen des Betons und Zements besteht. Mit einem derartigen Mörtel verputzte Wände halten die zum Fixieren von Zeichnungen häufig benutzten Haftmagnete fest.

Überraschenderweise gelingt es durch die Erfindung auch Ruß in den Beton hereinzubringen, und dadurch die Leitfähigkeit des Betons noch zu erhöhen.

Ruß allein, oder Ruß und Salz mischen sich wegen des Fettgehaltes des Rußes sehr schlecht mit Wasser. Das erfindungsgemäße Pulver und Ruß lassen sich zusammen recht gut mit Wasser mischen. Am zweckmäßigsten wird Ruß während der Fällungsreaktion beigemischt, weil dadurch gleichzeitig eine Entfettung des Rußes eintritt. Das Fett schwimmt auf und kann von der Oberfläche der Flüssigkeit abgezogen werden bzw. wird nach der Bildung des Vorproduktes mit ihr abgeschüttet.

Man kann aber auch den Ruß dem feuchten Vorprodukt zusetzen, um dann das rußhaltige Vorprodukt zu trocknen und zu mahlen. Die Leitfähigkeit eines Betons läßt sich durch ein erfindungsgemäßes Pulver, welches 50% Ruß enthält, erheblich steigern. Sie ist relativ unabhängig von der Restfeuchte des Betons.

In entsprechender Weise läßt sich im übrigen auch Graphit zumischen.

Im Anspruch 11 wird schließlich auf die Möglichkeit hingewiesen, daß die Leitfähigkeit des Betons auch zu einer elektrischen Beheizung von Bauteilen ausgenutzt werden kann, indem ein Strom unmittelbar durch das leitende Betonteil geführt wird und dort zu einer Widerstandserwärmung führt, ohne daß es einer eingelegten Heizspirale bedarf.

**Ansprüche**

1. Verfahren zur Herstellung eines salzhaltigen Pulvers durch Mischen einer Substanz, die Salz (NaCl) in lösbarer Form enthält, mit Wasser und mit einer organischen Siliziumverbindung als Hydrophobierungsmittel sowie anschließendes Trocknen und ggf. Mahlen des durch das Mischen erzeugten Vorproduktes,
dadurch gekennzeichnet,
daß die durch das Mischen von Wasser und der Substanz, bei der es sich um einen Betonzusatzstoff in Pulverform handelt, die den Betonteilen eisbildungshemmende und elektrisch leitende Eigenschaften erteilt, erzeugte Sole mit flüssigem Wasserglas vermischt und das ausfallende Vorprodukt vor dem Austrocknen dekantiert wird.

2. Verfahren nach Anspruch 1,
dadurch gekennzeichnet,
daß einer gesättigten Sole soviel Wasserglas zugesetzt wird, daß mindestens 90 % des gelösten Salzes ausgefällt wird.

3. Verfahren nach einem der Ansprüche 1 und 2,
dadurch gekennzeichnet,
daß die Sole durch Vermischen von wenigstens 40 Gewichts-% NaCl enthaltenem Abfallsalz aus dem Kaliberbergbau oder Kaliaufbereitung mit Wasser hergestellt oder als Sole eine entsprechende Abfallauge der Kaliaufbereitung verwendet wird.

4. Verfahren nach einem der Ansprüche 1 bis 3,
   dadurch gekennzeichnet,
   daß der Sole oder dem getrockneten Pulver Ruß oder Graphit zugesetzt wird.

5. Verfahren nach einem der Ansprüche 1 bis 4,
   dadurch gekennzeichnet,
   daß bei der Herstellung des Vorproduktes ca. 30 Gewichtsteile Kali-Abfallsalz (mit 50 - 90 Gew.% NaCl) ca. 50 Gewichtsteile Wasser und ca. 20 Gewichtsteile flüssiges Industriewasserglas miteinander vermischt werden.

6. Verfahren nach einem der Ansprüche 1 bis 5,
   dadurch gekennzeichnet,
   daß das Mahlen bis auf eine Korngröße unter 0,1 mm erfolgt.

7. Verwendung eines Pulvers, hergestellt nach den Ansprüchen 1 bis 6, als Zusatzstoff für aushärtbare Massen, die nach dem Aushärten und nach einer Aushärtezeit von 5 x 24 Stunden im lufttrocknen Zustand die elektrische Leitfähigkeit eines Halbleiters aufweisen, insbesondere für die Herstellung von leitfähigem Beton.

8. Verwendung eines Pulvers hergestellt nach einem Verfahren gemäß einem der Ansprüche 1 bis 6, als Zusatzstoff für aushärtbare Massen, insbesondere zur Herstellung von Betonteilen, die mit Stahlteilen in Verbindung stehen, oder in die Stahlteile eingelassen oder eingebettet sind.

9. Verwendung eines Pulvers hergestellt nach einem Verfahren gemäß einem der Ansprüche 1 bis 6, als Zusatzstoff für die Herstellung von Beton oder Betonteilen von Brücken, insbesondere durch Kriechströme korrosionsgefährdeter Eisenbahn- oder Straßenbahnbrücken.

10. Verwendung eines Pulvers hergestellt nach einem Verfahren gemäß einem der Ansprüche 1 bis 6, als Zusatzstoff für die Herstellung von Fahrbahn- oder Gehwegdecken oder -platten aus Beton.

11. Verwendung eines Pulvers hergestellt nach einem Verfahren gemäß einem der Ansprüche 1 bis 6, als Zusatzstoff für die Herstellung von Betonteilen, die elektrisch beheizbar sind.

## Claims

1. Process for preparing a salt-containing powder by mixing a substance containing salt (NaCl) in soluble form with water and with an organic silicon compound as a water-repellent agent and also subsequent drying and optionally grinding of the initial product produced by the mixing,
   characterised in that the brine produced by mixing water and the substance, which substance is a concrete additive in powdered form, and provides the concrete parts with electrically conductive properties and properties preventing the formation of ice, is mixed with liquid waterglass and the resulting initial product is decanted before drying.

2. Process according to Claim 1, characterised in that waterglass is added to a saturated brine in such a quantity that at least 90% of the dissolved salt is precipitated.

3. Process according to one of Claims 1 and 2, characterised in that the brine is produced by mixing waste salt containing at least 40% by weight NaCl from potash mining or potash processing with water, or a corresponding waste lye from potash processing is used as the brine.

4. Process according to one of Claims 1 to 3, characterised in that soot or graphite is added to the brine or the dried powder.

5. Process according to one of Claims 1 to 4, characterised in that in the preparation of the initial product

5

approximately 30 parts by weight potash waste salt (with 50 - 90% by weight NaCl), approximately 50 parts by weight water and approximately 20 parts by weight liquid industrial waterglass are mixed together.

6. Process according to one of Claims 1 to 5, characterised in that the grinding takes place down to a grain size of below 0.1 mm.

7. Use of a powder, prepared according to Claims 1 to 6, as an additive for hardenable substances, which after hardening and after a hardening time of 5 x 24 hours in the air-dried state have the electric conductivity of a semiconductor, in particular for producing conductive concrete.

8. Use of a powder, prepared using a process according to one of Claims 1 to 6, as an additive for hardenable substances, in particular for the production of concrete parts which are in contact with steel parts, or are sunk or embedded in the steel parts.

9. Use of a powder, prepared using a process according to one of Claims 1 to 6, as an additive for the production of concrete or concrete parts of bridges, in particular railway or tramway bridges which are in danger of corrosion due to creeping currents.

10. Use of a powder, prepared using a process according to one of Claims 1 to 6, as an additive for the production of concrete roadway or pavement surfacings or slabs.

11. Use of a powder, prepared using a process according to one of Claims 1 to 6, as an additive for the production of concrete parts which can be electrically heated.

## Revendications

1. Procédé pour fabriquer une poudre contenant du sel par mélange d'une substance, qui contient du sel (NaCl) sous forme soluble, avec de l'eau et avec un composé de silicium organique, en tant que milieu hydrophobe, ainsi que séchage ultérieur et, le cas échéant, broyage du produit semi-fini créé par le mélange, caractérisé en ce que la saumure créée par le mélange de l'eau et de la substance, qui est un additif du béton sous forme pulvérulente, qui confère aux pièces de béton des propriétés de conduction électrique et ralentissant la formation de la glace, est mélangée à du verre soluble liquide, et le produit semi-fini qui précipite est décanté avant le séchage.

2. Procédé selon la revendication 1, caractérisé en ce que la quantité de verre soluble ajouté à une saumure saturée est telle qu'au moins 90 % du sel en solution sont précipités.

3. Procédé selon une des revendications 1 ou 2, caractérisé en ce que la saumure est réalisée par mélange de sel résiduaire, contenant au moins 40 % en poids de NaCl, provenant de l'exploitation ou du traitement de la potasse, avec de l'eau, ou en ce qu'une lessive résiduaire correspondante du traitement de la potasse est utilisée en tant que saumure.

4. Procédé selon une des revendications 1 à 3, caractérisé en ce que du noir de carbone ou du graphite est ajouté à la saumure ou à la poudre sèche.

5. Procédé selon une des revendications 1 à 4, caractérisé en ce que, lors de la fabrication du produit semi-fini, environ 30 parties en poids de sel résiduaire de potasse (avec 50-90 % en poids de NaCl), environ 50 parties en poids d'eau et environ 20 parties en poids de verre soluble liquide industriel sont mélangées ensemble.

6. Procédé selon une des revendications 1 à 5, caractérisé en ce que le broyage a lieu jusqu'à une grosseur de grains inférieure à 0,1 mm.

7. Utilisation d'une poudre, réalisée selon les revendications 1 à 6, comme additif pour des matières durcissables, qui, après le durcissement et après une durée de durcissement de 5 x 24 heures, dans l'état séché à l'air, présentent la conductibilité électrique d'un semi-conducteur, en particulier pour la fabrication de béton conducteur.

8. Utilisation d'une poudre, réalisée d'après un procédé selon une des revendications 1 à 6, comme additif pour des matières durcissables, en particulier pour la fabrication de pièces de béton, qui sont reliées à des pièces d'acier, ou sont noyées ou encastrées dans les pièces d'acier.

9. Utilisation d'une poudre, réalisée d'après un procédé selon une des revendications 1 à 6, comme additif pour la fabrication du béton ou de pièces de béton de ponts, en particulier de ponts routiers ou ferroviaires menacés de corrosion par des courants de fuite.

10. Utilisation d'une poudre, réalisée d'après un procédé selon une des revendications 1 à 6, comme additif pour la fabrication de plaques ou couvertures de chaussées ou de trottoirs.

11. Utilisation d'une poudre, réalisée d'après un procédé selon une des revendications 1 à 6, comme additif pour la fabrication de pièces de béton qui peuvent être chauffées électriquement.